# EUROPÄISCHE PATENTSCHRIFT

(11) **EP 2 010 416 B1**
(45) Veröffentlichungstag und Bekanntmachung des Hinweises auf die Patenterteilung: **24.02.2010**
(21) Anmeldenummer: 07724179.2
(22) Anmeldetag: 12.04.2007
(51) Int. Cl.: B60R 22/40

(54) **GURTAUFROLLER FÜR EINEN FAHRZEUGSICHERHEITSGURT**
SEAT BELT RETRACTOR FOR A MOTOR VEHICLE SAFETY BELT
ENROULEUR DE CEINTURE D'UNE CEINTURE DE SECURITE DE VEHICULE AUTOMOBILE

(30) Priorität: 20.04.2006 DE 102006018240
(43) Veröffentlichungstag der Anmeldung: 07.01.2009
(73) Patentinhaber: Autoliv Development AB, 447 83 Vargarda (SE)
(72) Erfinder: VERMUSE, David, 76220 Férrères en Bray (FR); DOUCET, David, 76000 Rouen (FR)
(74) Vertreter: Schön, Thilo
(86) Internationale Anmeldenummer: PCT/EP2007/003238
(87) Internationale Veröffentlichungsnummer: WO 2007/121862

(56) Entgegenhaltungen:
- EP-A1- 1 552 992
- EP-A2- 0 359 960
- DE-U1- 9 005 829
- GB-A- 2 294 384
- US-A1- 2006 055 226

## Beschreibung

### Technisches Gebiet der Erfindung

Die Erfindung betrifft einen Gurtaufroller für einen Fahrzeugsicherheitsgurt mit einer Wickelwelle zum Auf- und Abwickeln eines gegen eine Federkraft ausziehbaren Gurtes, mit einer Steuerscheibe mit einer Verzahnung und einem fahrzeugsensitiven Beschleunigungssensor mit einem Blockierhebel, welcher bei Überschreiten einer vorbestimmten Beschleunigung aus einer Aussereingriffstellung in eine Eingriffstellung in die Verzahnung der Steuerscheibe bewegbar ist, und mit einem über Reibschluß derart an der Wickelwelle gelagertem Hebel, dass dieser bei Drehung der Wickelwelle in Einzugsrichtung den Blockierhebel in Aussereingriffstellung festlegt und bei Drehung der Wickelwelle in Auszugsrichtung der Wickelwelle den Blockierhebel freigibt.

### Stand der Technik

Ein Gurtaufroller der gattungsgemäßen Art ist z.B. aus der DE 90 05 829U bekannt. Aufgabe des an der Wickelwelle über Reibschluß gelagerten Hebels ist es, zum einen einen blockierungsfreien Einzug des Gurtes zu gewährleisten und zum anderen störende Klappergeräusche durch die in dem fahrzeugsensitiven Sensor üblicherweise verwendete Trägheitsmasse bzw. den Blockierhebel zu verringern.

### Gegenstand der Erfindung

Ausgehend von diesem Stand der Technik liegt der Erfindung die Aufgabe zugrunde, die Klappergeräusche weiter zu verringern und ferner sicherzustellen, dass der Hebel auch noch nach größerer Betriebsdauer seine Funktion, nämlich den Blockierhebel in der Aussereingriffstellung zu halten, erfüllen kann.

Die Erfindung wird gelöst durch einen Gurtaufroller mit den Merkmalen des Anspruch 1. Vorteilhafte Aus- und Weiterbildungen sind in den Unteransprüchen angegeben.

Gemäß den kennzeichnenden Merkmalen des Anspruch 1 wird vorgeschlagen, dass an dem Blockierhebel ein Federarm vorgesehen ist, und der Hebel in der Aussereingriffstellung des Blockierhebels diesen durch Anliegen an dem Federarm festlegt. Damit wird eine Möglichkeit geschaffen, von dem Hebel eine Federspannung auf den Blockierhebel auszuüben, über die der Blockierhebel die Trägheitsmasse einerseits mit einer größeren Anpreßkraft festlegt und so die Entstehung von Klappergeräuschen durch unerwünschte Bewegungen der Trägheitsmasse vermindert. Ferner ist eine elastische Bewegungsmöglichkeit geschaffen, die eine Bewegung zwischen Hebel und Blockierhebel ermöglicht, ohne dass dabei Klappergeräusche durch den abhebenden und aufprallenden Hebel auf den Blockierhebel entstehen. Durch entsprechende Auslegung der Federkraft des Federarmes kann zusätzlich sichergestellt werden, dass der Hebel den Blockierhebel auch noch nach sehr langer Betriebsdauer sicher in der Außereingriffstellung festlegen kann.

Die Federkraft kann z.B. sehr einfach dadurch erzeugt werden, indem der Federarm in die Bewegungsbahn des Hebels radialeinwärts hineinragt. Dabei kann ein Ende des Federarmes mit dem Blockierhebel verbunden sein, und eine freies Ende auf den Hebel in seiner den Blockierhebel nichtfestlegenden Stellung zugewandt sein. Damit ist auf sehr einfache Art sichergestellt, dass der Hebel bei der Bewegung in Richtung Federarm von diesem selbst nicht blockiert wird, sondern der Hebel das freie Ende des Federarmes bei erster Kontaktaufnahme mit diesem herunterdrücken kann.

Die Federkraft kann mit zunehmendem Schwenkwinkel des Hebels vergrößert werden, so dass der Hebel beim Auffahren auf den Federarm gegen Ende der Schwenkbewegung abgebremst wird.

Ferner wird vorgeschlagen, dass der Hebel eine dem Federarm zugewandte Schräge aufweist, damit die funktionsgerechte Schwenkbewegung des Hebels und das Auffahren auf den Federarm weiter verbessert und verhindert wird, dass der Hebel durch mögliche Fertigungsungenauigkeiten und ungenaue Ausrichtung beider Teile zueinander an dem Federarm hängenbleibt.

Der Federarm kann weiterhin einen die Bewegung des Hebels begrenzenden Anschlag aufweisen, damit die Schwenkbewegung kontrolliert begrenzt wird und der Hebel den Federarm gegen Ende der Schwenkbewegung nicht überfahren kann.

Die Schwenkbewegung wird weiter optimiert, indem der Hebel bei reibschlüssiger Mitnahme durch die Wickelwelle eine Schwenkbewegung ausführt und die dem Hebel zugewandte Fläche des Federarms an die Bewegung des an Ihm anliegenden Teils des Hebels angepaßt ist.

Die geometrische Auslegung des Blockierhebels, des Federarmes und der Steuerscheibe wird weiter vereinfacht, indem der Hebel und die Steuerscheibe konzentrisch zu der Achse der Wickelwelle angeordnet sind und die Spitze des Hebels die Steuerscheibe radial auswärts gerichtet überragt. Der Blockierhebel und der Federarm sind damit beide so ausgelegt, dass sie die Steuerscheibe radialeinwärts nicht überlappen und so ein ungewollter Eingriff in die Verzahnung der Steuerscheibe sicher ausgeschlossen werden kann.

Die Erfindung wird nachfolgend anhand eines bevorzugten Ausführungsbeispieles näher erläutert. Die Figuren zeigen:

### Kurzbeschreibung der Zeichnungen

- Fig.1: Gurtaufroller mit fahrzeugsensitivem Beschleunigungssensor und Blockierhebel festgelegt in der Außereingriffstellung
- Fig.2: Gurtaufroller mit fahrzeugsensitivem Beschleunigungssensor und nicht festgelegtem Blockierhebel

### Beschreibung bevorzugter Ausführungsformen

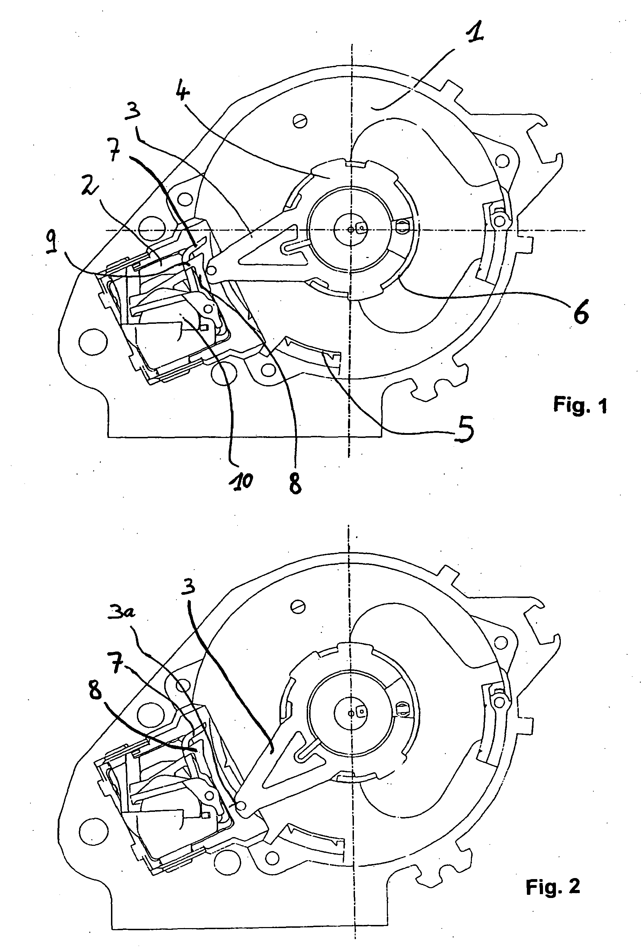

In Fig.1 ist ein Gurtaufroller 1 in Seitenansicht mit einer nichtdetailliert dargestellten Wickelwelle und einem fahrzeugsensitiven Beschleunigungssensor 2 zu erkennen. An der Wickelwelle ist eine Steuerscheibe 5 vorgesehen, welche bei dem Ausführen einer Relativbewegung zu der Wickelwelle einen Blockiermechanismus auslöst, der im Stand der Technik bekannt, ist und nicht Bestandteil dieser Erfindung ist, weshalb auf dessen Darstellung verzichtet wurde. Der fahrzeugsensitive Sensor 2 besitzt eine Trägheitsmasse 10, welche z.B. aus einer masseträgen Kugel bestehen kann, und einem an der Trägheitsmasse 10 anliegenden Blockierhebel 7. Die Trägheitsmasse 10 wird bei dem Überschreiten eines kritischen Beschleunigungswertes ausgelenkt und bewegt dabei den Blockierhebel 7 aus der Aussereingriffstellung in die Eingriffstellung in die Verzahnung der Steuerscheibe 5. Die Steuerscheibe 5 wird im nichtblockierten Zustand des Gurtaufrollers mit der Wickelwelle mitbewegt. Durch das Eingreifen des Blockierhebels 7 in die Verzahnung der Steuerscheibe 5 wird diese angehalten, so dass die Wickelwelle zu der Steuerscheibe 5 eine Relativbewegung ausführt und dadurch den im Stand der Technik bekannten Blockiermechanismus, wie z.B. eine in eine gehäusefeste Verzahnung eingreifende Blockierklinke, auslöst.

An der Wickelwelle ist ein Hebel 3 über einen C-förmigen Ansatz 4 angeordnet, wobei der C-förmige Ansatz 4 über eine Ringfeder 6 reibschlüssig mit der Wickelwelle verbunden ist. Der Hebel 3 wird bei der Auf- und Abrollbewegung des Gurtaufrollers durch den Reibschluß in die jeweilige Richtung mitbewegt, d.h. in der Fig.1 bei der Aufrollbewegung im Uhrzeigersinn und bei der Abrollbewegung entgegen dem Uhrzeigersinn. In der Fig.1 ist die Stellung dargestellt, in der der Hebel 3 während der Aufrollbewegung den fahrzeugsensitiven Beschleunigungssensor 2 in der Aussereingriffstellung hält. Der Hebel 3 drückt den Blockierhebel 7 nieder, wobei in dieser Stellung die Trägheitsmasse 10 durch den niedergehaltenen Blockierhebel 7 festgeklemmt ist, so dass Klappergeräusche verursacht durch die Bewegung der Trägheitsmasse 10 verhindert sind. Damit wird die Geräuschentwicklung während der Aufrollbewegung deutlich vermindert. In der Fig.2 ist der Hebel 3 in der Stellung der Abrollbewegung dargestellt, in der der Blockierhebel 7 nichtblockiert ist, und damit in der Lage ist, bei dem Überschreiten des kritischen Beschleunigungswertes in die Eingriffstellung in die Verzahnung zu verschwenken, und somit seine eigentliche Funktion wahrnehmen kann.

Der Hebel 3 hält den Blockierhebel 7 über einen an ihm angeordneten Federarm 8 nieder. Der Federarm 8 ist so dimensioniert, dass er in die Bewegungsbahn des Hebels radialeinwärts gerichtet hineinragt, und so beim Anliegen des Hebels 3 eine Federspannung auf den Blockierhebel 7 ausübt. Durch die Federspannung wird eine erhöhte Einspannkraft auf die Trägheitsmasse 10 ausgeübt, wodurch schließlich der erfindungsgemäße Vorteil der Geräuschverminderung erreicht wird. Ferner ist sichergestellt, dass der Hebel auch nach längerem Gebrauch noch sicher den Blockierhebel 7 niederhält was zu einer erhöhten Betriebssicherheit beiträgt und mögliche Geräusche durch Abheben und Aufprallen des Hebels 3 von bzw. auf den Blockierhebel 7 verhindert. Der Federarm 8 ist mit einem Ende über einen Stützarm 9 an dem Blockierhebel 7 angeordnet, während das freie Ende in der nichtblockierten Stellung des Blockierhebels 7 in Richtung Hebel 3 gerichtet ist, wie in Fig.2 zu erkennen ist. Bei einem Wechsel der Bewegungsrichtung des Gurtaufrollers von der Abrollrichtung mit der Stellung des Hebels 3 gemäß Fig. 2 in die Aufrollrichtung gemäß Hebelstellung in Fig.1 führt der Hebel 3 eine Drehbewegung im Uhrzeigersinn aus. Der Hebel 3 wird auf den Blockierhebel 7 zubewegt, und fährt auf das freie Ende des Federarmes 8 auf, wobei diese Drehbewegung dadurch erleichtert wird, indem der Hebel 3 eine dem Federarm 8 zugewandte Schräge 3a aufweist. Damit kann der Federarm 8 bewußt so ausgelegt werden, dass dieser weiter radialeinwärts in die Bewegungsbahn des Hebels 3 hineinragt und somit eine erhöhte Federspannung gegeben ist, ohne das die Gefahr besteht, das der Hebel 3 nicht auf den Federarm 8 auffahren kann sondern an dessen Spitze in Radialrichtung blockiert wird. Die dem Hebel 3 zugewandte Fläche des Federarmes 8 ist an die Schwenkbewegung des Hebels 7 angepaßt kann aber auch zur Erhöhung der Federspannung relative zu dem Hebel 3 nach Art einer Rampe ansteigen. An der Seite des Stützarmes 9 besitzt der Federarm 8 einen Anschlag in Form einer Schräge, die an die Schräge 3a anpaßt ist, und der Begrenzung der Schwenkbewegung des Hebels 3 dient. Ferner ist über dies Schräge sichergestellt, dass der Hebel 3 nicht zum Ende der Schwenkbewegung über den Federarm 8 hinwegbewegt wird.

## Patentansprüche

1. Gurtaufroller (1) für einen Fahrzeugsicherheitsgurt mit einer Wickelwelle zum Auf- und Abwickeln eines gegen eine Federkraft ausziehbaren Gurtes, mit einer Steuerscheibe (5) mit einer Verzahnung und einem fahrzeugsensitiven Beschleunigungssensor (2) mit einem Blockierhebel (7), welcher bei Überschreiten einer vorbestimmten Beschleunigung aus einer Aussereingriffstellung in eine Eingriffstellung der Verzahnung der Steuerscheibe (5) bewegbar ist, und einem über Reibschluß derart an der Wickelwelle gelagertem Hebel (3), dass dieser bei Drehung der Wickelwelle in Einzugsrichtung den Blockierhebel (7) in Aussereingriffstellung festlegt und bei Drehung der Wickelwelle in Auszugsrichtung der Wickelwelle den Blockierhebel (7) freigibt, **dadurch gekennzeichnet, dass** an dem Blockierhebel (7) ein Federarm (8) vorgesehen ist und der Hebel (3) in der Aussereingriffstellung des Blockierhebels (7) diesen durch Anliegen an dem Federarm (8) festlegt.

2. Gurtaufroller nach Anspruch 1, **dadurch gekennzeichnet, dass** der Federarm (8) in die Bewegungsbahn des Hebels (3) radial einwärts hineinragt.

3. Gurtaufroller nach Anspruch 1 oder 2, **dadurch gekennzeichnet, dass** der Federarm (8) mit einem Ende mit dem Blockierhebel (7) verbunden ist und das freie Ende des Federarmes (8) in der den Blockierhebel (7) nichtfestlegenden Stellung des Hebels (3) diesem zugewandt ausgerichtet ist.

4. Gurtaufroller nach einem der vorangegangenen Ansprüche, **dadurch gekennzeichnet, dass** der Hebel (3) eine dem Federarm (8) zugewandte Schräge (3a) aufweist.

5. Gurtaufroller nach einem der vorangegangenen Ansprüche, **dadurch gekennzeichnet, dass** der Federarm (8) einen die Bewegung des Hebels (3) begrenzenden Anschlag aufweist.

6. Gurtaufroller nach einem der vorangegangenen Ansprüche, **dadurch gekennzeichnet, dass** der Hebel (3) bei reibschlüssiger Mitnahme durch die Wickelwelle eine Schwenkbewegung ausführt und die dem Hebel (3) zugewandte Fläche des Federarms (8) an die Bewegung des an Ihm anliegenden Teils des Hebels (3) angepaßt ist.

7. Gurtaufroller nach einem der vorangegangenen Ansprüche, **dadurch gekennzeichnet, dass** der Hebel (3) und die Steuerscheibe (5) konzentrisch zu der Achse der Wickelwelle angeordnet sind und die Spitze des Hebels (3) die Steuerscheibe (5) radial auswärts gerichtet überragt.

## Claims

1. Seat belt retractor (1) for a motor vehicle safety belt with a winding shaft for rolling an extendable belt up and down against an elastic force, with a control disc (5) with gearing and a vehicle- sensitive acceleration sensor (2) with a blocking lever (7) that can move into the gearing of the control disc (5), if a predetermined acceleration speed is exceeded, out of an unengaged position into an engaged position, and a frictionally engaged lever (3) geared to the winding shaft in such a way that when the winding shaft is turned in the incoming direction, the blocking lever (7) is fixed in the unengaged position, and when the winding shaft is turned in the outgoing direction of the winding shaft, the blocking lever (7) is released, **characterised in that** a spring arm (8) is provided on the blocking lever (7), and the lever (3), in the unengaged position of the blocking lever (7), fixes the lever by abutting on the spring arm (8).

2. Seat belt retractor according to claim 1, **characterised in that** the spring arm (8) projects radially inwards into the path of movement of the lever (3).

3. Seat belt retractor according to claim 1 or 2, **characterised in that** the spring arm (8) is connected by one end to the blocking lever (7) and the free end of the spring arm (8), in the position of the lever (3) not fixing the blocking lever (7), is aligned facing towards the lever.

4. Seat belt retractor according to one of the preceding claims, **characterised in that** the lever (3) has a bevel (3a) facing towards the spring arm (8).

5. Seat belt retractor according to one of the preceding claims, **characterised in that** the spring arm (8) has a stop which restricts the movement of the lever (3).

6. Seat belt retractor according to one of the preceding claims, **characterised in that** the lever (3), when frictionally engaged by the winding shaft, executes a swivelling movement and the area of the spring arm (8) facing towards the lever (3) is adapted to the movement of the part of the lever (3) abutting thereon.

7. Seat belt retractor according to the previous claims, **characterised in that** the lever (3) and the control disc (5) are arranged concentrically to the axis of the winding shaft and the tip of the lever (3) rises above the control disc (5), aligned radially outwards.

## Revendications

1. Enrouleur de ceinture (1) pour une ceinture de sécurité, comportant un arbre d'enroulement pour l'enroulement et le déroulement d'une sangle apte à être déployée à l'encontre de la force d'un ressort, comportant un disque de commande (5) avec une denture et un capteur d'accélération (2) sensible au véhicule avec un levier de blocage (7) qui, en cas de dépassement d'une accélération prédéterminée, peut être déplacé hors d'une position hors de prise dans une position d'engrènement de la denture du disque de commande (5), et un levier (3) logé par assemblage par force sur l'arbre d'enroulement, de telle sorte que ledit levier, sous l'effet de la rotation de l'arbre d'enroulement dans la position d'engrènement, immobilise le levier de blocage (7) dans la position hors de prise et, sous l'effet de la rotation de l'arbre d'enroulement dans la position hors de prise de l'arbre d'enroulement, libère le levier de blocage (7), **caractérisé en ce que** sur le levier de blocage (7) est prévu un bras de ressort (8), et, dans la position hors de prise du levier de blocage (7), le levier (3) immobilise ce dernier sous l'effet d'un appui contre le bras de ressort (8).

2. Enrouleur de ceinture selon la revendication 1, **caractérisé en ce que** le bras de ressort (8) s'engage radialement à l'intérieur de la trajectoire de déplacement du levier (3).

3. Enrouleur de ceinture selon la revendication 1 ou 2, **caractérisé en ce que** le bras de ressort (8) est relié par une extrémité au levier de blocage (7) et l'extrémité libre du bras de ressort (8), dans la position du levier (3) n'immobilisant pas le levier de blocage (7), est orientée vers ledit levier.

4. Enrouleur de ceinture selon l'une quelconque des revendications précédentes, **caractérisé en ce que** le levier (3) comporte un chanfrein (3a) orienté vers le bras de ressort (8).

5. Enrouleur de ceinture selon l'une quelconque des revendications précédentes, **caractérisé en ce que** le bras de ressort (8) comporte une butée limitant le déplacement du levier (3).

6. Enrouleur de ceinture selon l'une quelconque des revendications précédentes, **caractérisé en ce que** le levier (3), en cas d'entraînement par friction par l'arbre d'enroulement, effectue un mouvement de pivotement et la surface du bras de ressort (8), orientée vers le levier (3), est adaptée au mouvement de la partie du levier (3) en appui contre elle.

7. Enrouleur de ceinture selon l'une quelconque des revendications précédentes, **caractérisé en ce que** le levier (3) et le disque de commande (5) sont disposés concentriquement à l'arbre d'enroulement et la pointe du levier (3) dépasse le disque de commande (5) en étant orientée radialement vers l'extérieur.
